Europäisches Patentamt

European Patent Office

Office européen des brevets

(19)

(11) **EP 0 885 506 B1**

(12) **EUROPÄISCHE PATENTSCHRIFT**

(45) Veröffentlichungstag und Bekanntmachung des Hinweises auf die Patenterteilung:
**04.08.2004 Patentblatt 2004/32**

(21) Anmeldenummer: **97915332.7**

(22) Anmeldetag: **04.03.1997**

(51) Int Cl.⁷: **H04L 12/40**

(86) Internationale Anmeldenummer:
**PCT/DE1997/000404**

(87) Internationale Veröffentlichungsnummer:
**WO 1997/033408 (12.09.1997 Gazette 1997/39)**

(54) **VERFAHREN UND ANORDNUNG ZUR ÜBERTRAGUNG EINES DATENPAKETS IM ETHERNET VON EINER ERSTEN ANORDNUNG ZU MINDESTENS EINER ZWEITEN ANORDNUNG**

METHOD AND DEVICE FOR TRANSMITTING A DATA PACKET USING ETHERNET FROM A FIRST DEVICE TO AT LEAST ONE OTHER DEVICE

PROCEDE DE TRANSMISSION D'UN PAQUET DE DONNEES SUR ETHERNET ENTRE UN PREMIER DISPOSITIF ET AU MOINS UN DEUXIEME DISPOSITIF

(84) Benannte Vertragsstaaten:
**DE FR GB IT**

(30) Priorität: **08.03.1996 DE 19609080**
**08.03.1996 EP 96103699**

(43) Veröffentlichungstag der Anmeldung:
**23.12.1998 Patentblatt 1998/52**

(73) Patentinhaber: **SIEMENS AKTIENGESELLSCHAFT**
**80333 München (DE)**

(72) Erfinder:
• **BÖCKING, Stefan**
  **D-81475 München (DE)**
• **BRAUN, Bodo**
  **D-85635 Höhenkirchen-Siegertsbrunn (DE)**
• **HUTH, Hans-Peter**
  **D-80638 München (DE)**

(56) Entgegenhaltungen:
**EP-A- 0 333 225          WO-A-87/01545**
**US-A- 4 815 110          US-A- 5 319 641**
**US-A- 5 353 287**

## Beschreibung

Lokale Rechnernetze, die nach dem IEEE 802.3-Standard, der im folgenden als Ethernet-Standard bezeichnet wird, ausgestaltet sind, stellen eine Technologie dar, mit der Endgeräte über einen gemeinsam genutzten seriellen Bus verbunden werden. Der Zugriff auf diesen Bus wird durch das sog. Carrier Sense Multiple Access / Collision Detection (CSMA/CD) geregelt. Das Ethernet-Protokoll ist ein sog. faires Protokoll, d. h. alle an einem Bus angeschlossenen Endgeräte haben bei konkurrierendem Zugriff im statistische Mittel die gleiche Chance, ihre zu übertragenden Daten über den Bus zu übertragen, ungeachtet der Art der zu übertragenden Daten.

In vielen Fällen ist es jedoch erforderlich, gewisse Datenströme gegenüber anderen zu bevorzugen. Beispiele sind hierfür Datenströme mit Echtzeit-Anforderungen, beispielsweise ein Ton-Datenstrom oder ein Videodatenstrom, aber auch Alarmmeldungen zur Steuerung von Maschinen. Derartige Datenströme benötigen eine gewisse Mindestqualität bei der Übertragung. Garantien für solche Mindestqualitäten werden jedoch bei dem Ethernet-Protokoll derzeit nicht gewährleistet, da bei dem CSMA/CD-Protokoll keine Unterscheidung der Datenströme und deshalb auch keine unterschiedliche Behandlung der Datenströme möglich ist.

Der Ethernet-Bus ist ein passives Übertragungsmedium, die Vermittlungsleistung ist verteilt in den Endgeräten, die ebenfalls nach dem Ethernet-Protokoll arbeiten, realisiert. Das sog. Switched Ethernet ist eine Technologie, bei der lokale Netze nach dem IEEE 802.3-Standard durch eine Paketvermittlung anstelle des sonst üblichen Ethernet-Bus gekoppelt werden. Die Paketvermittlung wird durch den sog. Ethernet-Knoten realisiert. Ein Ethernet-Knoten weist mehrere bidirektionale Zugänge auf, die sog. Ports. Der Ethernet-Knoten muß eingehende Datenpakete durch mindestens einen Ausgangsport weiterleiten, der mit dem Ziel bzw. den Zielen des Datenpakets direkt oder indirekt gekoppelt ist. Treffen unterschiedliche Eingangspakete ein, welche über denselben Ausgangsport ausgegeben werden müssen, so werden die Pakete zwischengespeichert. Der dazu verwendete Pufferspeicher kann in Hochlastfällen überlaufen, neu eintreffende Datenpakete gehen in diesem Fall verloren.

Aus dem Dokument [1] sind verschiedene Paketformate des Ethernet-Protokolls bekannt.

Aus US-A-5 319 641 ist es bekannt, Datenpaketen zwei unterschiedliche Prioritäten zuzuordnen, entweder eine hohe Priorität oder eine niedrige Priorität. Bei diesem Verfahren ist es möglich, daß die gesamte Bandbreite im Ethernet von dem hochprioren Datenstrom belegt wird, sodaß keine Daten der niederprioren Datenstroms mehr übertragen werden können.

Der Erfindung liegt das Problem zugrunde, ein mit dem Ethernet-Standard konformes Verfahren anzugeben, mit dem für Datenströme eine gewisse Mindestqualität der Übertragung bezüglich Echtzeit-Anforderungen bei der Übertragung gewährleistet wird.

Das Problem wird durch das Verfahren gemäß Patentanspruch 1 gelöst.

Bei dem Verfahren gemäß Patentanspruch 1 wird jedem von einer ersten Anordnung zu übertragenden Datenpaket eine Prioritätsklasse zugeordnet und das Datenpaket wird entsprechend der Prioritätsklasse gekennzeichnet. Anschließend wird das Datenpaket unter Berücksichtigung einer Zugangskontrolle zu einer zweiten Anordnung übertragen.

Ein erheblicher Vorteil des Verfahrens ist v. a. darin zu sehen, daß eine Priorisierung der Datenpakete, beispielsweise nach der Art des zu übertragenden Datenstroms möglich wird. Auf diese Weise kann für Datenpakete, welche eine höhere Priorität aufgrund Qualitätsanforderungen bezüglich Echtzeit-Anforderungen bei der Übertragung benötigen, im statistischen Mittel die geforderte Qualität gewährleistet werden.

Der Ausdruck "im statistischen Mittel" ist in diesem Zusammenhang in der Weise zu verstehen, daß eine Gewährleistung der Qualitätsanforderungen mit einer gewissen Wahrscheinlichkeit entsprechend der verwendeten Prioriätsklasse gegeben werden kann. Die Ursache hierfür ist darin zu sehen, daß die Datenpakete entsprechend ihrer Priorität beispielsweise Datenpakete höherer Priorität gegenüber Datenpakete minderer Priorität bevorzugt übertragen werden.

Vorteilhafte Weiterbildungen der Erfindung ergeben sich aus den abhängigen Ansprüchen.

Um eine mehrstufige Kommunikationsverbindung, d. h. eine Kommunikationsverbindung über mehrere Ethernet-Vermittlungsknoten, realisieren zu können, ist es in einer Weiterbildung des Verfahrens vorteilhaft, daß das Datenpaket von einer zweiten Anordnung empfangen wird, die dem Datenpaket zugeordnete Prioritätsklasse ermittelt wird und bei dem wiederum das Datenpaket unter Berücksichtigung der Prioritätsklasse weiter übertragen wird.

Durch diese Vorgehensweise wird eine Vereinfachung des Verfahrens erreicht, da nicht in jedem Vermittlungsknoten wiederum eine gänzliche neue Prioritätsklasse für das Datenpaket gebildet und dem Datenpaket zugeordnet werden muß, sondern es wird lediglich die dem Datenpaket zuvor zugeordnete Prioritätsklasse ermittelt und die Prioritätsklasse wird im weiteren Verfahren weiter verwendet.

Zur Zuordnung der Prioritätsklasse zu dem Datenpaket ist es vorteilhaft, in dem der sog. Ethernet-Schicht zugeführten Datenpaket enthaltene Information über die Art des Datenpaketes und somit über die Art der Kommunikationsverbindung oder auch über die Art des Datenstroms zu analysieren und bei der Zuordnung der Prioritätsklasse die analysierte Information zu berücksichtigen. Auf diese Weise wird es automatisch möglich, die Art des Datenpakets und somit die geforderten Qualitätsbedürfnisse des Datenstroms zu analysieren und zu gewährleisten.

Ferner ist es in einer Weiterbildung des Verfahrens vorteilhaft, für das Datenpaket eine Zugangskontrolle durchzuführen, wodurch einer Überlastung der Anordnung, mit der das Verfahren durchgeführt wird, durch zu viele zu übertragende Datenpakete vorgebeugt werden kann.

Ferner ist es in einer Weiterbildung des Verfahrens vorteilhaft, einen Pufferspeicher der Anordnung in mehrere Teile aufzuteilen und jeden Teil des Pufferspeichers jeweils mindestens einer Prioritätsklasse zuzuordnen. Dies bedeutet, daß jeweils in dem entsprechenden Teil des Pufferspeichers nur Datenpakete der entsprechenden Prioritätsklasse gespeichert werden können.

Die oben beschriebene Weiterbildung wird dadurch noch weiter verbessert, daß die Datenpakete aus den entsprechenden Teilen des Pufferspeichers in einer vorgebbaren Reihenfolge ausgelesen und übertragen werden. Die Reihenfolge kann nach einem beliebigen Scheduling-Verfahren vorgegeben werden.

Ferner ist es vorteilhaft, daß für den Fall des Überlaufs des Pufferspeichers oder eines Teils des Pufferspeichers in einer Anordnung, die als Ethernet-Vermittlungselement ausgestaltet ist, das den Überlauf verursachende Datenpaket nur dann verworfen wird, wenn ein Abbruch des Empfangsvorgangs durch eine künstliche Kollision für dieses Datenpaket nicht möglich ist.

Ferner ist es in einer Weiterbildung vorteilhaft, die künstlichen Kollisionen der Datenpakete nur für Datenpakete zu erzeugen, von deren Quell-Anordnung bekannt ist, daß die Erzeugung einer künstlichen Kollision zulässig, d. h. beispielsweise von der sendenden Anordnung verarbeitbar ist. Durch diese Weiterbildung wird eine Auswahl für die Anordnungen getroffen, die eine künstliche Kollision eines gesendeten Datenpakets verarbeiten können.

Ferner ist es in einer Weiterbildung vorteilhaft, für Datenpakete, die einer vorgebbaren Kommunikationsverbindung zugeordnet werden, in einer Verbindungsaufbauphase ausgehandelte, während der Kommunikationsverbindung benötigte Betriebsmittel während der gesamten Kommunikationsverbindung zu reservieren. Auf diese Weise können erheblich sichere Gewährleistungen für die Qualitätsanforderung der zu übertragenden Datenpakete erfüllt werden.

Die Anordnung zur Durchführung des Verfahrens weist eine Datenpaket-Klassifizierungseinheit, eine Prioritäts-Markierungseinheit sowie einen Pufferspeicher auf. Mit der Datenpaket-Klassifizierungseinheit wird dem Datenpaket die Prioritätsklasse zugeordnet und mit der Prioritäts-Markierungseinheit wird das Datenpaket entsprechend der Prioritätsklasse eindeutig gekennzeichnet. In dem Pufferspeicher werden die zu übertragenden Datenpakete zwischengespeichert.

Ferner ist es in einer Weiterbildung vorteilhaft, eine Betriebsmittelverwaltungseinheit in den Anordnungen und dem Vermittlungsknoten vorzusehen, die mindestens eine der folgenden Funktionen aufweist:

- Verwaltung von Betriebsmitteln,
- Zugangskontrolle für das Datenpaket und/oder
- Signalisierung zwischen den gekoppelten Anordnungen.

Mit Hilfe der Betriebsmittelverwaltungseinheit ist eine vereinfachte Organisation der Durchführung des Verfahrens möglich, womit eine Verbesserung des Verfahrens erreicht wird.

Ferner ist es vorteilhaft, der Betriebsmittelverwaltungseinheit des Vermittlungsknotens eine eigene sog. Media-Access-Control-Adresse (MAC-Adresse) zuzuordnen, wordurch es möglich wird, die Betriebsmittelverwaltungseinheit separat zu adressieren und somit auch unabhängig von der das Verfahren durchführenden Anordnung zu realisieren.

In den Figuren sind Ausführungsbeispiele der Erfindung dargestellt, die im weiteren näher erläutert werden.

Es zeigen

Fig. 1      eine Skizze von Anordnungen einer Kommunikationsverbindung mit zwei Endgeräten und einer Vermittlungseinheit, die gemäß dem Ethernet-Protokoll Datenpakete austauschen;

Fig. 2      ein Ablaufdiagramm, in dem das Verfahren in seinen Verfahrensschritten mit einigen Weiterbildungen dargestellt ist;

Fig. 3a bis 3f      eine Skizze, in der verschiedene Protokollformate des Ethernet-Standards und damit verbundene verschiedene Möglichkeiten zur Kennzeichnung eines Datenpakets dargestellt sind;

Fig. 4      eine Skizze der Anordnung, mit einigen Weiterbildungen und detaillierten Darstellungen, mit denen das Zusammenwirken mit weiteren Kommunikationsschichten beschrieben wird;

Fig. 5a bis 5f      verschiedene Protokollformate und damit verbundene Möglichkeiten, ein im weiteren beschriebenes Back-Pressure-Verfahren unter Beibehaltung des Ethernet-Standards zu realisieren;

Fig. 6      ein Nachrichtenflußdiagramm, in dem beispielhaft eine Signalisierung und der Datenaustausch der in Figur 1 dargestellten Anordnungen beschrieben ist;

Fig. 7      ein Skizze, in der eine zeitliche Aufteilung der Bandbreite der Kommunikationsverbindung in mehrere Zeitintervalle für verschiedene Prioritätsklassen dargestellt ist.

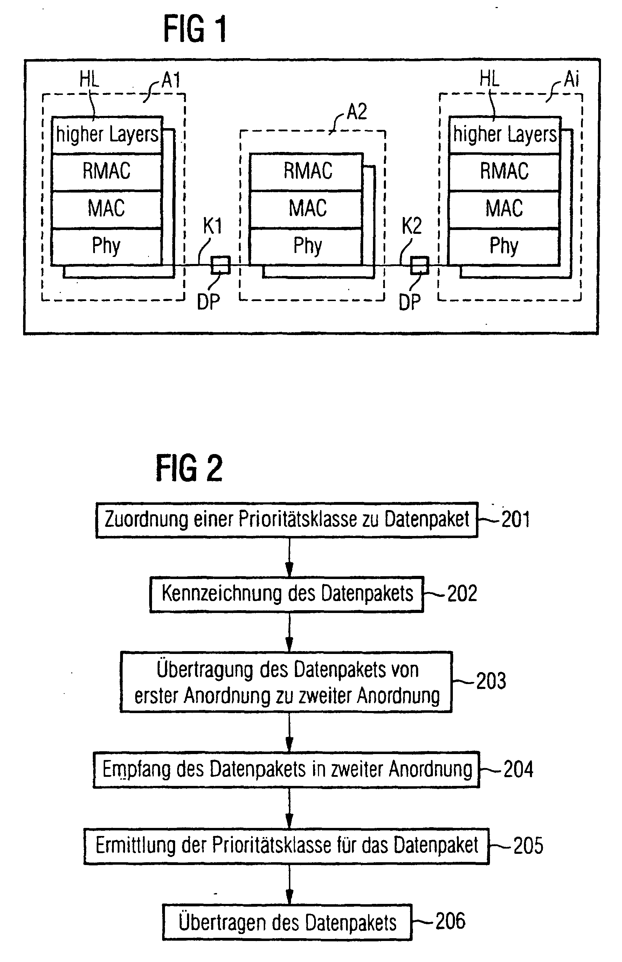

In Fig. 1 sind Anordnungen einer beispielhaft dargestellten Kommunikationsverbindung, bei der gemäß dem Ethernet-Standard eine Übertragung von Datenpaketen erfolgt, dargestellt.

Es ist eine erste Anordnung A1, eine zweite Anordnung A2, sowie weitere Anordnungen Ai dargestellt.

In diesem Beispielfall ist die erste Anordnung A1 als ein Ethernet-Endgerät ausgestaltet. Die zweite Anordnung A2 ist als ein Vermittlungselement, als sog. Ethernet-Vermittlungsknoten (Ethernet-Switch) ausgestaltet. Eine weitere Anordnung Ai ist in diesem Beispielfall wiederum als ein Ethernet-Endgerät ausgestaltet. Mit einem ersten Index i wird jede weitere Anordnung Ai eindeutig gekennzeichnet, wobei der erste Index i eine beliebige natürliche Zahl ist.

Zwischen den Anordnungen A1, A2, Ai besteht eine Punkt-zu-Punkt Verbindung, zwischen der ersten Anordnung A1 und der zweiten Anordnung A2 durch eine erste Kopplung K1 und zwischen der zweiten Anordnung A2 und der weiteren Anordnung Ai eine zweite Kopplung K2.

Es ist jedoch ebenso möglich, daß im sogenannten Shared Ethernet als Ethernet-Endgeräte ausgestaltete Anordnungen direkt miteinander gekoppelt sind, und nicht wie im sogenannten Switched Ethernet durch mindestens eine als Vermittlungselement ausgestaltete Anordnung getrennt sind.

Da sich der Ethernet-Standard an dem sog. Schichtenmodell der International Standardisation Organisation (ISO) orientiert, werden die Anordnungen in der Prinzipdarstellung in Form von Kommunikationsschichten beschrieben. Die Kopplungen K1, K2 bilden das physikalische Medium, gemeinsam mit der sog. physikalischen Schicht PHY, die auch als Bitübertragungsschicht bezeichnet wird. Mit der Bitübertragungschicht ist die Ethernet-Schicht, beispielsweise die Schicht der Media-Access-Control (MAC-Schicht) gekoppelt. In der Ethernet-Schicht wird das standardisierte Ethernet-Protokoll durchgeführt. Die erfindungsgemäße Erweiterung des Ethernet-Protokolls kann logisch als eine Zwischenschicht zwischen der MAC-Schicht und weiteren, höheren Kommunikationsschichten betrachtet werden. Aus diesem Grunde ist in der Fig. 1 das Verfahren als eine selbständige Schicht RMAC (Real Time Media-Access-Control) dargestellt.

Die im weiteren als Zwischenschicht RMAC bezeichnete selbständige Schicht RMAC ist zum einen mit der MAC-Schicht gekoppelt und und zum anderen mit weiteren Kommunikationsschichten. Unter weiteren Kommunikationsschichten sind beliebige, bekannte Transportprotokolle zu verstehen, beispielsweise TCP/IP (Transport Control Protocol/Internet Protocol) oder UDP/IP (User Datagramm Protocol/Internet Protocol) oder IPX, usw.. Die Gesamtheit aller logisch oberhalb der Zwischenschicht RMAC angeordneten Kommunikationsschichten werden in Fig. 1 vereinfachend als höhere Schichten HL bezeichnet. Der generelle Aufbau der Anordnungen bezüglich der höheren Schichten HL sowie der Bitübertragungsschicht PHY und der MAC-Schicht ist im Rahmen des jeweils verwendeten Protokolls beliebig. Da die zweite Anordnung in diesem Beispielsfall als Ethernet-Switch ausgestaltet ist, weist die zweite Anordnung in diesem Fall keine höheren Schichten HL auf. Dies ist gemäß dem Ethernet-Standard nicht erforderlich.

Auch wenn in Fig. 1 lediglich drei Anordnungen dargestellt sind, kann sich eine Kommunikationsverbindung, in der das Verfahren durchgeführt wird, über eine beliebige Anzahl von Anordnungen erstrecken, da das Ethernet-Protokoll sich lediglich auf eine Verbindung direkt miteinander gekoppelter Anordnungen bezieht.

Das standardisierte Ethernet-Protokoll weist v. a. den Nachteil auf, daß durch den freien Zugriff aller an dem Ethernet-Bus angeschlossenen Geräte gem. dem CSMA/CD-Protokoll ein freier Zugriff für alle zu übertragenden Datenpakete DP möglich ist, ungeachtet der Art der zu übertragenden Daten.

Dies führt dazu, daß für Datenströme, die vorgebbare Echtzeit-Anforderungen an die Übertragung der Datenpakete DP der entsprechenden Kommunikationsverbindung stellen, nicht gewährleistet werden können.

Die verschiedenen Echtzeit-Anforderungen werden im weiteren als Qualitätsmerkmale bezeichnet. Unter Qualitätsmerkmalen sind im Rahmen dieses Dokumentes beispielsweise folgende Kriterien zu verstehen:

- Laufzeiten der Datenpakete DP,
- Laufzeitschwankungen der Datenpakete DP,
- Verluste der Datenpakete DP bei Überlast der Kommunikationsverbindung bzw. der Anordnungen,
- Nutzdatenraten, usw.

Um bestimmte Qualitätsmerkmale, die völlig applikationsspezifisch sind und applikationsspezifisch frei vorgebbar sind, gewährleisten zu können, weist das Verfahren folgende Verfahrensschritte auf, die in Fig. 2 gemeinsam mit einigen Weiterbildungen des Verfahrens dargestellt sind.

Das zu übertragende Datenpaket DP wird von einer höheren Schicht HL der Zwischenschicht RMAC zugeführt. Zur Übertragung des Datenpakets DP im Ethernet sind folgende Verfahrensschritte vorgesehen.

Dem Datenpaket DP wird in einem ersten Schritt 201 eine Prioritätsklasse PKj aus einer Menge einer beliebigen Anzahl von Prioritätsklassen PKj zugeordnet. Mit dem zweiten Index j wird jede Prioritätsklasse PKj eindeutig gekennzeichnet, wobei der zweite Index j eine beliebige natürliche Zahl ist.

Das Datenpaket DP wird in einem weiteren Schritt 202 entsprechend der Prioritätsklasse PKj eindeutig markiert.

In einem letzten Schritt 203 wird das Datenpaket DP von der ersten Anordnung A1, in der das Verfahren durchgeführt wird, zu der zweiten Anordnung A2 übertragen.

In einer Weiterbildung des Verfahrens sind weitere Verfahrensschritte vorgesehen, die ebenso in Fig. 2 dargestellt sind.

Das Datenpaket DP wird in einem weiteren Verfahrensschritt 204 von der zweiten Anordnung A2 empfangen.

Anschließend wird in der zweiten Anordnung A2 die Prioritätsklasse PKj, die dem Datenpaket DP in der ersten Anordnung A1 zugeordnet wurde, ermittelt 205.

Unter Berücksichtigung der ermittelten Prioritätsklasse PKj wird das Datenpaket DP weiter übertragen 206, in diesem Beispielsfall, der in Fig. 1 dargestellt ist, zu der weiteren Anordnung Ai.

Im weiteren werden die einzelnen Verfahrensschritte in ihrer konkreten Ausgestaltung in diesem Ausführungsbeispiel näher erläutert.

## Zuordnung der Prioritätsklasse PKJ zu dem Datenpaket DP 201

Allgemein bedeutet die Zuordnung der Prioritätklasse PKj zu dem Datenpaket DP eine Abbildung der möglicherweise großen Anzahl benötigter Qualitätsmerkmale auf die Prioritätsklasse PKj, durch die die entsprechende Kombination der erforderlichen Qualitätsmerkmale gewährleistet wird.

Auch wenn die Anzahl und Eigenschaften der Qualitätsmerkmale beliebig ist, hat es sich als vorteilhaft herausgestellt, folgende Quality of Service- Parameter (QOS-Parameter) zur Gewährleistung der Qualitätsmerkmale in dem Verfahren zu berücksichtigen. Es hat sich als ausreichend herausgestellt, daß folgende vier Prioritätsklassen Pkj (j=0, 1, 2, 3) im Rahmen dieses Verfahrens berücksichtigt werden.

Eine erste Prioritätsklasse PK0 ist vorgesehen für eine verbindungslose Kommunikationsverbindung, bei der lediglich gewährleistet wird, daß mit einer unspezifizierten Bitrate nach besten Möglichkeiten abhängig von der Auslastung des Kommunikationsnetzes ohne jegliche Gewährleistung und ohne Verbindungsaufbau das jeweilige Datenpaket DP übertragen wird. Somit entspricht die erste Prioritätsklasse PK0 der niedrigsten Priorität, die dem Datenpaket DP zugeordnet werden kann.

Eine zweite Prioritätsklasse PK1 ist für eine verbindungsorientierte Kommunikationsverbindung vorgesehen, bei der eine kontrollierte Verzögerung, d. h. eine maximale Verzögerung der Übertragung des Datenpakets DP statistische gewährleistet wird. Bei dem Dienst der sog. kontrollierten Verzögerung werden beispielsweise folgende Dienstmerkmale realisiert:

- es wird eine für die Verbindung benötigte Bandbreite, die in einem im weiteren beschriebenen Verbindungsaufbau ausgehandelt wird, gewährleistet;
- die durchschnittlichen Verzögerungen bei der Übertragung des Datenpaketes DP bei großer Belastung des Kommunikationsnetzes sind keinesfalls schlechter als die Verzögerungen der Datenpakete DP, denen die erste Prioritätsklasse PK0 zugeordnet wurde;
- die max. Verspätung bei der Übertragung des Datenpakes DP bei großer Last des Kommunikationsnetzes sind erheblich geringer als die von Datenpaketen DP der ersten Prioritätsklasse PK0;
- die Verlustrate der Datenpakete DP aufgrund von Überläufen des Pufferspeichers PS der Anordnungen A1, A2, Ai sind nicht erheblich, solange sich die Eigenschaften des Datenstroms, also der ausgehandelten Kommunikationsverbindung an den in der Verbindundgsaufbauphase ausgehandelten "Verkehrsvertrag" für die jeweilige Kommunikationsverbindung hält.

Mit der zweiten Prioritätsklasse PK1 wird somit ein Dienst realisiert, mit dem ein Bandbreitenbedarf mit schwacher, bzw. mit keinen Echtzeit-Anforderungen gewährleistet wird. Die zweite Prioritätsklasse PK1 eignet sich z. B. für bursthaften Verkehr mit Bedarf einer Kommunikationsverbindung für eine bestimmte Bandbreite.

Eine dritte Prioritätsklasse PK2 bezieht sich auf eine verbindungsorientierte Kommunikationsverbindung. Für Datenpakete DP, denen die dritte Prioritätsklasse PK2 zugeordnet wurde, werden beispielsweise folgende Dienste vorgesehen:

- die meisten Datenpakete DP werden tatsächlich vollständig übertragen;
- in den meisten Fällen wird die Verspätung der Datenpakete DP bei der Übertragung nicht eine vorgebbare maximale Verzögerungszeit für die Übertragung der Datenpakte DP überschreiten.

In diesem Zusammenhang ist der Ausdruck "meisten Datenpakete" in einer Weise zu verstehen, daß dies eine vorgebbare, in der Verbindungsaufbauphase beispielsweise anzugebende Zahl ist. Es ist beispielsweise in vielen Fällen ausreichend, daß eines von 1.000 übertragenen Datenpaketen DP innerhalb einer Sekunde und maximal eines von 10.000 Datenpaketen DP in noch längeren Zeitintervallen die durch den Wert der für die "meisten Datenpakete" angegebene Grenze überschritten wird. Somit wird durch die dritte Prioritätsklasse PK2 ein Dienst gewährleistet, bei dem eine kontrollierte Verzögerung zzgl. einer maximalen Verzögerungsgrenze gewährleistet wird, womit ein "Fast-Echtzeit"-Dienst realisiert wird.

Eine vierte Prioritätsklasse PK3 ist ebenso für eine verbindungsorientierte Kommunikationsverbindung vorgesehen. Bei der vierten Prioritätsklasse PK3, die der höchsten Priorität entspricht, die dem Datenpaket DP zugewiesen werden kann, werden beispielsweise folgende Dienste gewährleistet:

- die beispielsweise während des Verbindungsaufbaus ausgehandelte benötigte Bandbreite für die Kommunikationsverbindung wird zur Verfügung gestellt;
- vorgebbare maximale Verspätungszeiten für das Datenpaket DP bei der Übertragung werden garantiert;
- es treten keine Verluste von Datenpaketen DP aufgrund von Überläufen des Pufferspeichers PS auf.

Somit werden die bei dem Verbindungsaufbau ausgehandelten Parameter der Kommunikationsverbindung in der vierten Prioritätsklasse PK3 mit einer sehr viel höheren statistischen Sicherheit als bei den anderen Prioritätsklassen PK0, PK1, PK2 gewährleistet, solange nicht das gesamte Kommunikationsnetz zusammenbricht, z. B. aufgrund eines Fehlers in dem Kommunikationsnetz.

**Kennzeichnung des Datenpakets DP entsprechend der zugeordneten Prioritätsklasse PKi 202.**

Die Art und Weise, wie das Datenpaket DP markiert wird, so daß der Empfänger des Datenpakets DP jeweils ermitteln kann, welche Prioritätsklasse PKI dem Datenpaket DP zugeordnet wurde, kann auf verschiedene Arten erfolgen.

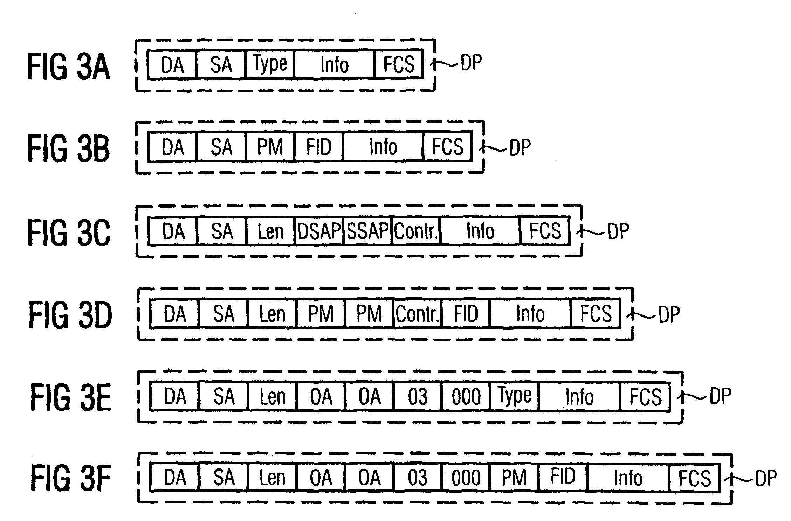

Ein übliches Ethernet-Datenpaket DP weist z. B. folgende, im Ethernet-Standard ausgewiesene Felder in dem Datenpaket DP auf (vgl. Figur 3a):

- ein Zieladreßfeld DA, in dem die Adresse des Empfängers des Datenpakets DP angegeben ist;
- ein Senderadreßfeld SA, in dem die Adresse des Senders des Datenpakets DP angegeben ist;
- ein Feld Type, welches von-dem Empfänger des Datenpakets DP als ganze Zahl interpretiert wird und üblicherweise die Länge von zwei Oktetten aufweist. Das Feld Type wird je nach Zahl, die in dem Feld steht, unterschiedlich interpretiert. Ist die Zahl kleiner als 1500, so wird das Feld Type z. B. als Längenfeld interpretiert und das restliche Datenpaket DP entspricht dem üblichen sog. Logic-Link-Control-Format (LLC-Format). Ist die Zahl in dem Feld Type jedoch nicht kleiner als 1500, so wird die Zahl als Typangabe interpretiert. Die Typangabe enthält einen Code für das Netzwerkprotokoll, das die nach-folgende, in dem Datenpaket DP enthaltene Information generiert hat.

In dem sog. LLC-Format wird das Netzwerkprotokoll durch den sog. Dienstzugangspunkt (Service-Access-Point, SAP), den,LLC-Service-Access-Point (LLC SAP) definiert. Ein Beispiel eines solchen Paketformats ist in Fig. 3c dargestellt. In Fig. 3e ist eine Variante des LLC-Formats, das sog. LLC-Subnet-Attachment-Point-Format (SNAP) dargestellt, bei dem der Service-Access-Point (SAP) fest auf den Wert hexadezimal 0A gesetzt wird. Das Netzwerkprotokoll ist bei dieser Variante in einem separaten Feld Type (vgl. Figur 3e) codiert.

Ferner weisen alle Protokollelemente ein Informationsfeld Info auf, in dem die eigentliche, von höheren Schichten HL zugeführten zu übertragenden Informationen in dem Datenpaket DP enthalten sind.

Auch ist ein Fehlererkennungsfeld FCS mit einem Prüfsummencode in den Protokollformaten vorgesehen.

Die Kennzeichnung des Datenpakets DP mit der dem Datenpaket DP zugeordneten Prioritätsklasse PKi kann entsprechend des jeweiligen Protokollformats auf unterschiedliche Weise erfolgen.

In Fig. 3b ist für das übliche Protokollformat aus Figur 3a in dem Feld Type eine Prioritätsmarke PM eingetragen. Die Prioritätsmarke PM ist ein eindeutiger Wert, mit dem die Prioritätsklasse PKi eindeutig gekennzeichnet wird. Dieser Wert muß allgemein eindeutig für die entsprechende Prioritätsklasse reserviert werden.

Weiterhin ist es in einer Variante des Verfahrens vorgesehen, Datenpakete DP niedrigster Priorität, also z. B. der ersten Prioritätsklasse PK0 gar nicht zu markieren sondern unverändert gemäß dem üblichen Ethernet-Standard zu verwenden.

Da es möglich ist, daß eine Anordnung mit unterschiedlichen höheren Schichten HL arbeitet, beispielsweise sowohl einerseits mit dem TCP/IP-Protokoll und andererseits auch mit dem SPX/IPX-Protokoll für unterschiedliche Kommunikationsverbindungen, ist es in einer Weiterbildung des Verfahrens vorteilhaft, ein weiteres Feld in dem Datenpaket DP vorzusehen. Das weitere Feld wird als Flußidentikator FID bezeichnet. Der Flußidentikator FID wird in der das Datenpaket DP sendenden Anordnung eindeutig generiert. Somit ist es dem Empfänger des Datenpakets DP möglich, anhand des Datenpakets DP eine eindeutige Zuordnung des Datenpakets DP zu dem Typ der Kommunikationsverbindung, der Prioritätsmarke PM und dem Service-Access-Point, der Kopplung zu den höheren Schichten eindeutig zu ermitteln. Dies ist möglich, da durch die oben beschriebene Vorgehensweise die Kombination der MAC-Senderadresse und des Flußidentikators FID weltweit eindeutig ist und somit in dem Empfänger des Datenpakets DP zur eindeutigen Zuordnung des Datenpakets DP verwendet werden kann.

Da, wie oben beschrieben wurde, bei markierten Datenpaketen DP der ursprüngliche Feldinhalt des Feldes Type beschrieben wird, muß die darin enthaltene Information über das zugehörige Netzwerkprotokoll zuvor separat zum Empfänger, beispielsweise der zweiten Anordnung A2 übertragen werden. Dies erfolgt in einer Signalisierungsphase, die im weiteren näher erläutert wird.

In Fig. 3d ist die Kennzeichnung für das Protokollformat, welches in Fig. 3c beschrieben ist, dargestellt. Dabei ist die Prioritätsmarke PM in dem Feld DSAP enthalten, welches üblicherweise den Empfänger-Dienstzugangspunkt der höheren Schicht HL enthält.

Ferner kann die Prioritätsmarke PM ersatzweise oder zusätzlich auch in einem Feld SSAP enthalten sein, welches üblicherweise den Wert des Dienstzugangspunktes der höheren Schicht HL des Senders des Datenpakets DP enthält.

Das Feld des Flußidentikators FID ist bei dieser Variante ebenso in einer Weiterbildung zusätzlich in dem Datenpaket DP vorgesehen.

Bei dem Format, welches in Fig. 3e dargestellt ist, wird beispielsweise die Prioritätsmarke PM in dem Feld Type übertragen (vgl. Fig. 3f). Ferner ist wiederum ein Feld für den Flußidentikator FID vorgesehen. Diese Möglichkeit, die Prioritätsmarke PM und damit die Angabe der Prioritätsklasse PKi in einer Markierung des Datenpakets DP umzusetzen, stellt lediglich eines von vielen Beispielen dar.

Es ist ebenso in Varianten möglich, neue Felder zur Aufnahme dieser Information vorzusehen.

Werden für unterschiedliche Datenströme verschiedene Dienstzugangspunkte verwendet, so wird die Zuordnung des Datenstroms zu der Prioritätsklasse PKi in eine Tabelle geschrieben und jedem Datenpaket DP, welches dem Datenstrom zugeordnet wird, wird die entsprechende Prioritätsklasse PKi zugeordnet, die in der Tabelle festgelegt wurde.

Ist es jedoch nicht der Fall, daß für jeden Datenstrom ein eigener Zugangspunkt vorgesehen ist, so ist es vorgesehen, daß beispielsweise durch Ermittlung der Identifikationsnummer des Ports des Datenpakets DP, das von einer TCP/IP-Schicht zugeführt wurde, zu ermitteln. Es können aber auch andere Informationen, die den Datenstrom kennzeichnen, dem das Datenpaket DP zugeordnet wird, und schon in höheren Schichten als beispielsweise der TCP/IP-Schicht generiert wurden, ermittelt und ausgewertet werden.

Dies führt beispielsweise dazu, daß für den Fall, daß für das Datenpaket DP der zugehörige Datenstrom identifiziert werden konnte, eine Abbildung auf die entsprechende Prioritätsklasse PKi, die dem Datenpaket DP zugeordnet werden soll, vorgenommen werden kann.

Es ist in einer Weiterbildung des Verfahrens ferner vorgesehen, daß die Abbildung der Qualitätsmerkmale, die für den Datenstrom, also die Kommunikationsverbindung gewährleistet werden sollen, während einer Verbindungsaufbauphase dynamisch konfigurierbar ausgestaltet ist. Wurde für den Datenstrom, dem das Datenpaket DP zugeordnet ist, keine Verbindungsaufbauphase durchgeführt, so wird im einfachsten Fall dem Datenpaket DP entsprechend die erste Prioritätsklasse PK0 zugeordnet.

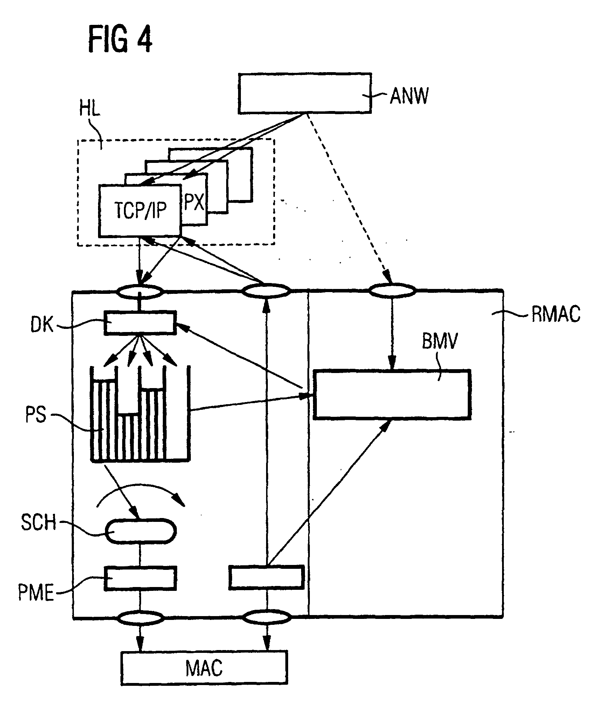

Am folgenden Beispiel wird die Anordnung und das Verfahren weiter verdeutlicht. Eine beliebige Anwendung ANW (vgl. Fig. 4), z. B. ein beliebiges Programm verwendet als Transportprotokoll, das UDP/IP-Protokoll, um Videodaten über das Ethernet zu übertragen.

Ist die Portnummer des zu übertragenden UDP-Datenstroms bekannt, ist es möglich, daß für die Verbindungen Betriebsmittel angefordert werden. Dabei wird für eine im weiteren beschriebenen Signalsierung von einer Betriebsmittelverwaltungseinheit BMV ermittelt, für welche UDP-Portnummer welche Betriebsmittel benötigt werden.

Die Betriebsmittelverwaltungseinheit BMV führt z. B. eine Verbindungsaufbauphase durch und markiert,die neue Kommunikationsverbindung eindeutig. Die Markierung wird von der Anordnung erkannt, indem beispielsweise die UDP-Portnummer ausgewertet wird und ausgehend von dieser Portnummer die Kommunikationsverbindung für das Datenpaket DP und die entsprechende Prioritätsklasse PKi ermittelt werden kann.

In Fig. 4 ist die Anordnung, mit der das Verfahren beispielsweise durchgeführt werden kann, dargestellt. Die Anordnung, beispielsweise die erste Anordnung A1, die zweite Anordnung A2, sowie die weitere Anordnung AI weist mindestens eine Datenpaket-Klassifizierungseinheit DK, eine Prioritäts-Markierungseinheit PME sowie einen Pufferspeicher PS auf.

Die Anordnung ist logisch zwischen den höheren Schichten HL und der MAC-Schicht angeordnet.

Die Datenpaket-Klassifizierungseinheit DK ist derart ausgestaltet, daß die oben beschriebene Abbildung der Qualitätsmerkmale auf Prioritätsklassen PKi durchgeführt werden kann.

Die Prioritätsmarkierungseinheit PME ist derart ausgestaltet, daß die oben beschriebene Markierung, beispielsweise also das Schreiben von vorgegebenen Werten in bestimmte, vorgebbare Datenfelder des Datenpakets DP, durchgeführt wird.

Das zu übertragende Datenpaket DP wird von den höheren Schichten HL der Anordnung zugeführt. Dort wird es der Datenpaketklassifizierungseinheit DK zugeführt, die Prioritätsklasse PKi für das Datenpaket DP ermittelt und das Datenpaket DP wird in dem Pufferspeicher PS abgespeichert.

In einer Weiterbildung des Verfahrens ist es vorgesehen, den einzelnen Prioritätsklassen PKi separate Teile des Pufferspeichers PS vorgebbarer Größe zuzuordnen. In die separaten Teile, die den Prioritätsklassen PKi zugeordnet werden, werden nur jeweils die Datenpakete DP eingeschrieben, denen die Prioritätsklassen PKi zugeordnet wurde, die dem Teil des Pufferspeichers PS entspricht. Die einzelnen Teile des Pufferspeichers PS sind vorzugsweise nach dem First-In-First-Out Prinzip (FIFO-Pufferspeicher) ausgestaltet. Auf diese Weise ist es einfach möglich, eine sog. Warteschlange für die Datenpakete DP vor der Übertragung der Datenpakete DP zu realisieren.

Durch diese Ausgestaltung der Anordnung wird eine einfache Realisierung des Verfahrens ermöglicht.

Zum Auslesen der Datenpakete DP aus den Teilen des Pufferspeichers PS kann ein beliebiges Scheduling-Verfahren verwendet werden. Eine Übersicht über verschiedene Scheduling-Verfahren ist in dem Dokument [2] zu finden.

Ein sehr einfacher Algorithmus zum Auslesen der Datenpakete DP aus den Teilen des Pufferspeichers PS ist darin zu sehen, daß jeweils, wenn ein Datenpaket DP aus dem Pufferspeicher PS zur Übertragung des Datenpaketes DP ausgelesen werden soll, jeweils der Teil des Pufferspeichers PS, welcher der höchsten Prioritätsklasse, beispielsweise der vierten Prioritätsklasse PK3 entspricht, untersucht und überprüft wird, ob in diesem Teil des Pufferspeichers PS ein Datenpaket DP zur Übertragung ansteht. Ist dies nicht der Fall, so wird sukzessive in fallender Reihenfolge der Prioritäts der nächste Teil des Pufferspeichers PS, der jeweils die nächst niedrigere Prioritätsklasse PKi-1 zugewiesen wird, entsprechend ausgesucht. Zur Durchführung des entsprechenden Scheduling-Verfahrens ist in einer Weiterbildung der Anordnung eine Schedulereinheit SCH vorgesehen.

Ferner ist in einer Weiterbildung der Anordnung die Betriebsmittelverwaltungseinheit BMV vorgesehen.

Die Betriebsmittelverwaltungseinheit BMV ist derart ausgestaltet, daß mindestens eine der folgenden Funktionen durch die Betriebsmittelverwaltungseinheit BMV gewährleistet wird:

- es werden die Betriebsmittel der jeweiligen Anordnung A1, A2, Ai und/oder Betriebsmittel eines zur Übertragung des Datenpakets DP verwendeten Kommunikationsnetzes verwaltet, beispielsweise der Pufferspeicher PS, die Bandbreite des Ethernets, die beispielsweise für eine Kommunikationsverbindung reserviert werden soll, der Scheduler SCH, usw.;
- für das Datenpaket DP wird eine Zugangskontrolle durchgeführt, abhängig von der das Datenpaket DP weiterbearbeitet wird oder nicht;
- es wird eine Signalisierung zwischen der Anordnung und mindestens einer weiteren Anordnung, mit der die Anordnung gekoppelt ist, durchgeführt. Bei dieser Signalisierung werden keine Charakteristika der Kommunikationsverbindung, beispielsweise die reservierte erforderliche Bandbreite, sowie weitere Qualitätsmerkmale für die Kommunikationsverbindung, die für die Kommunikationsverbindung gewährleistet werden, der das jeweilige Datenpaket DP zugeordnet wird, festgelegt.

In einer Weiterbildung der Anordnung ist es vorteilhaft, der Betriebsmittelverwaltungseinheit BMV eine eigene, selbständige Media-Access-Control-Adresse (MAC-Adresse) zuzuordnen. Damit wird es möglich, die Betriebsmittelverwaltungseinheit unabhängig, lediglich physikalisch gekoppelt von der restlichen Anordnung zu realisieren und lediglich über Kopplungen mit der Anordnung zu kommunizieren.

**Erzeugung von künstlichen Kollisionen**

In einer Weiterbildung des Verfahrens ist es vorgesehen in einer als Ethernet-Switch ausgestalteten Anordnung, für den Fall, daß der Pufferspeicher PS oder auch ein Teil des Pufferspeichers PS vollgeschrieben ist und ein Datenpaket DP in den Pufferspeicher PS oder in den gefüllten Teil des Pufferspeichers PS eingeschrieben werden soll, eine sog. künstliche Kollision für das einzuschreibende Datenpaket DP zu erzeugen, wodurch dem Sender direkt mitgeteilt wird, daß das Datenpaket DP zu dem jeweiligen Zeitpunkt nicht verarbeitet werden kann.

Der Sender des Datenpakets DP bricht daraufhin das Senden des Datenpakets DP ab und erst nach einer zufällig gewählten Zeitspanne wird der Sendeversuch des Datenpakets DP wiederholt. Auf diese Weise wird verhindert, daß Datenpakete DP verloren gehen, da der Sender des Datenpakets DP das Datenpaket DP ein weiteres Mal vollständig sendet.

Da jedoch bei dieser Weiterbildung des Verfahrens die Laufzeiten für das Datenpaket DP um den Betrag der Zeit bis zu dem ersten erfolgreichen Sendeversuch des Datenpakets DP steigen, und zwar nicht nur für die Daten der Kommunikationsverbindungen, welche durch den gefüllten Pufferspeicher PS müssen, sondern für alle Datenpakete DP des abgebremsten, d. h. "blockierten" Senders, unabhängig davon, welches Ziel diese Datenpakete DP haben oder welche Kommunikationsverbindung diese Datenpakete DP angehören, ist es vorteilhaft, folgende Weiterbildung vorzusehen.

Bei zu übertragenden Daten mit beispielsweise Echtzeit-Anforderungen sind jedoch, wie oben beschrieben wurde, zu lange Verzögerungen unter Umständen nicht akzeptabel. Es ist aus diesem Grunde vorteilhaft, Sender mit solchen Anforderungen vor künstlich erzeugten, unerwünschten Kollisionen der Datenpakete DP zu schützen, da es oftmals akzeptabler ist, bei diesen Arten von Datenströmen Paketverluste hinzunehmen, die durch den Überlauf des Pufferspeichers PS und/oder des Teils des Pufferspeichers PS verursacht werden, zu akzeptieren als eine Blockierung der gesamten Netzschnittstelle des Senders.

Dieses Problem wird dadurch gelöst, daß Endgeräten spezifisch und dynamisch die Verwendung der Erzeugung künstlicher Kollisionen, welches im weiteren als Backpressure bezeichnet wird; erlaubt oder verboten wird.

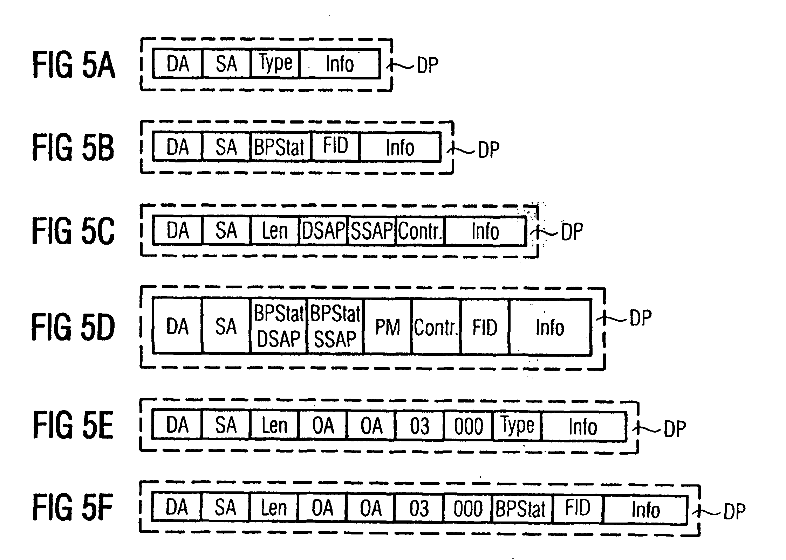

Zu diesem Zweck wird eine automatische Zuordnung der Angabe, ob das Back Pressure-Verfahren für das jeweilige über die MAC-Adresse identifizierte Endgerät erlaubt ist oder nicht, realisiert. Dafür ist es erforderlich, daß der Empfänger, der z. B. als Ethernet-Switch ausgestaltet ist, des Datenpakets DP erkennen kann, ob der Sender des Datenpakets DP für ein Back Pressure-Verfahren zugelassen ist oder nicht. Diese Information kann beispielsweise in dem Paketformat, welches in den Figuren 5a bis 5f dargestellt ist, enthalten sein und/oder in einer Tabelle in dem Empfänger des Datenpakets DP jeweils endgerätespezifisch eingetragen sein.

In den Fig. 5a, 5c und 5e sind die in den Fig. 3a, 3c und 3e dargstellten Paketformate für ein Ethernet-Datenpaket DP dargestellt.

Es ist in dieser Weiterbildung des Verfahrens beispielsweise in dem Feld Type eine Statusangabe BPSTAT vorgesehen, mit der angegeben wird, ob für den Sender des Datenpakets DP das Back Pressure-Verfahren zugelassen ist oder nicht.

Ebenso ist in einer Weiterbildung wiederum ein Flußidentifikatorfeld FID vorgesehen (vgl. Fig. 5b, 5e, 5f). Auch wenn in diesem Ausführungsbeispiel dieselben Felder verwendet wurden, wie dies für die Prioritätsklassen PKi beschrieben wurde, so ist es jedoch ebenso in einer Variante vorgesehen, weitere Felder in dem Protokollformat vorzusehen, um somit beide Informationen in einem Datenpaket DP übertragen zu können.

## Signalisierung

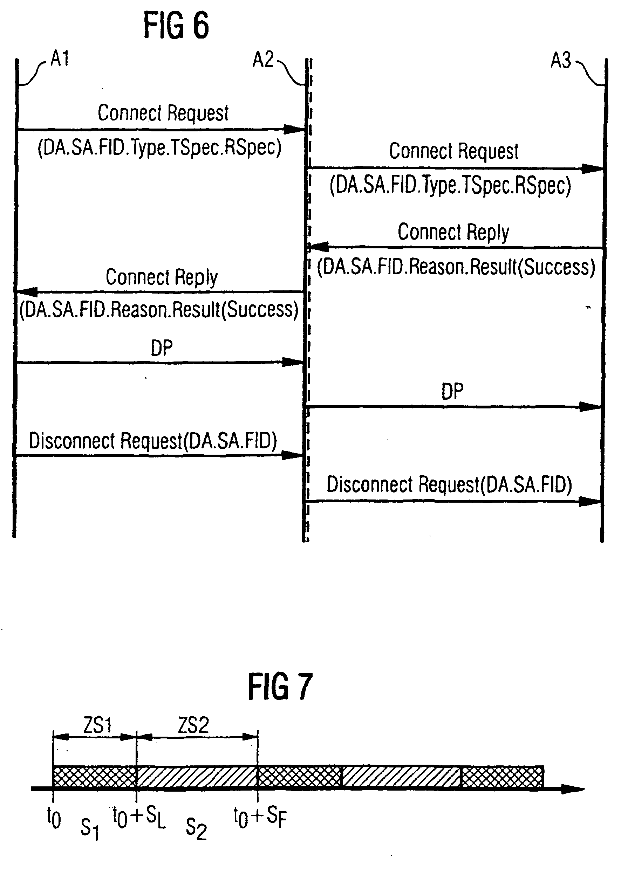

In Fig. 6 ist eine mögliche Signalisierung für die Kommunikationsverbindung, wie sie beispielsweise in Fig. 1 dargestellt ist, beschrieben.

Es wird von der ersten Anordnung A1 eine Verbindungsanforderung (Connect-Request) an die zweite Anordnung A2 gesendet. Der Connect-Request enthält beispielsweise die Zieladresse DA, die Senderadresse SA, die Angabe des Flußidentikators FID, das Feld Type, sowie ein Parameterfeld TSpec, in dem angegeben ist, welche Qualitätsmerkmale für die Kommunikationsverbindung angefordert werden, sowie beispielsweise ein Dienstklassenfeld RSpec, in dem angegeben wird, welche Dienstklasse, beispielsweise welche Prioritätsklasse PKi für die Kommunikationsverbindung angefordert wird.

Von der zweiten Anordnung A2 wird der Connect-Request direkt an die weitere Anordnung Ai weitergeleitet. Bei einer Kommunikationsverbindung, die über mehrere Ethernet-Vermittlungseinheiten geführt wird, ist die zweite Anordnung A2 als eine Menge von Vermittlungseinheiten zu verstehen, die jeweils den Connect-Request und die entsprechenden weiteren Datenpakete DP an dasjenige Endgerät, welches das korrespondierende Endgerät für die Kommunikationsverbindung darstellt, weiterleiten.

Von dem Endgerät, beispielsweise der weiteren Anordnung Ai wird eine Antwort Connect-Reply gesendet, die zusätzlich zu dem Zieladressfeld DA, der Senderadresse SA, den Flußidentifikator FID eine Angabe Result(Success) enthält, in der angegeben ist, ob die angeforderte Kommunikationsverbindung akzeptiert wurde oder nicht.

Ferner ist in einer Ergebnisangabe Reason die Ursache angegeben, warum die Kommunikationsverbindung beispielsweise nicht akzeptiert wurde. Eine Ursache kann beispielsweise in einer zu geringen verfügbaren Bandbreite in dem Kommunikationsnetz liegen. Diese Angaben können in einer vorgebbaren Weise codiert werden und somit enthalten diese Felder lediglich beliebige Zahlenwerte.

Die Antwort Connect-Reply wird an die erste Anordnung A1 über "alle zweite Anordnungen" A2 weitergeleitet. Nach Empfang der Antwort Connect-Reply in der ersten Anordnung A1 und einer positiven Antwort, d. h. einer Antwort in der Weise, daß die Kommunikationsverbindung akzeptiert wurde, ist diese im vorigen beschriebene Verbindungsaufbauphase beendet.

Anschließend erfolgt die eigentliche Übertragung der Nutzdaten, also der Datenpakete DP, denen jeweils entsprechend beispielsweise der ausgehandelten Prioritätsklasse PKi oder auch einer frei vorgebbaren Prioritätsklasse PKi, die von dem Sender festgelegt werden kann, oder auch die jeweils adaptiv, beispielsweise abhängig von der Netzbelastung der jeweiligen Ethernet-Vermittlungsanordnung dem Datenpaket DP zugeordnet werden.

Soll eine Kommunikationsverbindung abgebrochen werden, so wird dies beispielsweise dadurch erreicht, daß von dem Sender, beispielsweise der ersten Anordnung A1 eine Verbindungsabbruchsanforderung Disconnect-Request an die zweite Anordnung A2 gesendet und von der zweiten Anordnung A2 an die weitere Anordnung Ai weitergeleitet wird. Die Verbindungsabbruchsanforderung Disconnect-Request enthält beispielsweise die Zieladresse DA, die Senderadresse SA, sowie den Flußidentifikator FID.

**Realisierung der prioritätsgesteuerten Übertragung auf der Bitübertragungsschicht**

In einer Weiterbildung des Verfahrens ist es vorgesehen, daß die Bandbreite, die beispielsweise in dem Ethernet oder auch für eine Kommunikationsverbindung im Rahmen des Ethernets jeweils zur Verfügung steht, in eine Vielzahl von Bandbreitenbereiche aufgeteilt wird, beispielsweise entsprechend der Anzahl vorgesehener Prioritätsklassen PKi.

Jeder Teil der Bandbreite dient genau zur Übertragung der Datenpakete DP die der Prioritätsklasse PKi zugeordnet sind, denen auch der jeweilige Teil der Bandbreite zugeordnet ist.

Im folgenden wird der ganz einfache Fall dargestellt, bei dem lediglich zwei Prioritätsklassen PK0 und PK1 vorgesehen sind (vgl. Fig. 7).

Für diesen Fall werden beispielsweise zwei Zeitschlitze, ein erster Zeitschlitz ZS1 und ein zweiter Zeitschlitz ZS2 vorgesehen. Der erste Zeitschlitz ZS1 ist beispielsweise für hochpriore Daten, also für Datenpakete DP, denen die zweite Prioritätsklasse PK1 zugeordnet wurde, und der zweite Zeitschlitz ZS2 ist vorgesehen für Datenpakete, denen die niedrige Prioritätsklasse PK0 zugeordnet wurde.

Es ist hierbei in einer Weiterbildung des Verfahrens zur Vereinfachung des Verfahrens vorgesehen, daß lediglich die Größe des ersten Zeitschlitzes ZS1 verwaltet wird. Dies bedeutet, daß es vorteilhaft ist, daß die Zeitschlitze ZS1, ZS2 in ihrer Breite variabel ausgestaltet sind. Ausgehend von einem frei vorgebbaren Referenzzeitpunkt $t_0$ ergibt sich ein Anfangszeitpunkt des zweiten Zeitschlitzes ZS2 aus der Summe des Referenzzeitpunktes $t_0$ und einer Zeitschlitzlänge S1 des ersten Zeitschlitzes ZS1.

Die Zeitschlitzlänge S1 wird so gewählt, daß ein Verkehrsangebot $A_H$ aller hochprioren Datenströme übertragen werden kann. Es gilt:

$$A_H < \frac{S1}{S_F} \cdot B$$

Es wird mit B die Bandbreite des entsprechenden Ethernet-Segmentes bezeichnet. Mit $S_F$ wird die Summe der Zeitschlitzlänge S1 des ersten Zeitschlitzes und einer Zeitschlitzlänge S2 des zweiten Zeitschlitzes ZS2 bezeichnet ($S_F$ = S1 + S2). Die oben beschriebene Vorschrift gibt nur einen groben Anhaltspunkt zur Dimensionierung der ersten Zeitschlitzlänge S1. Eine beliebige Vorschrift zur Dimensionierung, d. h. Aufteilung der einzelnen Zeitschlitzlängen ist dem Fachmann geläufig.

Bestehen Anforderungen an die maximalen Verzögerungen $T_{Dmax}$ der hochprioren zu übertragenden Daten, so ist z. B. folgende Vorschrift zu beachten:

$$S_F < \min T_{Dmax} \text{ (aller hochprioren Kommunikationsverbindungen)} +S1$$

Ferner ist in einer Weiterbildung des Verfahrens vorteilhaft, den Referenzzeitpunkt $t_0$ von einer frei vorgebbaren Anordnung beispielsweise über Zeitnachrichten in frei vorgebbaren Zeitintervallen zu synchronisieren, d. h. der Referenzzeitpunkt $t_0$ wird in frei vorgebbaren Zeitintervallen von einer Anordnung an alle anderen Anordnungen gesendet. Die Zeitnachricht wird von den Anordnungen empfangen und als deren neuer Referenzzeitpunkt $t_0$ verwendet. Eine echte Synchronisation der Anordnungen ist im Ethernet nicht möglich. Durch dieses periodische Auffrischen der Referenzzeitpunkte $t_0$ wird jedoch eine ausreichend genaue Kopplung der in den Betriebssystemen der Anordnungen enthaltenen Uhren erreicht.

In diesem Dokument wurden folgende Veröffentlichungen zitiert:

[1] U. O. Pabrai, UNIX Internetworking, Artech House, Boston, London, S. 23, 1993

[2] H. Zhang und D. Ferrari, Rate-Controlled Static-Priority Queuing, Proc. of INFOCOM '93, San Francisco, CA, April 1993

**Patentansprüche**

1. Verfahren zur Übertragung eines Datenpakets im Ethernet von einer ersten Anordnung zu mindestens einer zweiten Anordnung,

   - bei dem dem zu übertragenden Datenpaket eine von mindestens zwei Prioritätsklassen zugeordnet wird (201),
   - bei dem das Datenpaket entsprechend der Prioritätsklasse eindeutig gekennzeichnet wird (202), **dadurch gekennzeichnet, daß**
   - für jedes Datenpaket eine Zugangskontrolle unter Berücksichtigung der dem jeweiligen Datenpaket zugeordneten Prioritätsklasse durchgeführt wird, wobei das jeweilige Datenpaket gemäß einer vorgebbaren Reihenfolge, die durch ein vorgebbares Scheduling-Verfahren festgelegt wird, zu der zweiten Anordnung übertragen wird.

2. Verfahren nach Anspruch 1,

   - bei dem das Datenpaket von der zweiten Anordnung empfangen wird (204),
   - bei dem die dem Datenpaket zugeordnete Prioritatsklasse ermittelt wird (205), und
   - bei dem das Datenpaket unter Berücksichtigung der dem Datenpaket zugeordneten Prioritätsklasse weiter übertragen wird (206).

3. Verfahren nach Anspruch 1 oder 2,

   - bei dem in dem Datenpaket enthaltene Information über die Art des Datenpakets und/oder eine Kommunikationsverbindung, der das Datenpaket zugeordnet wird, analysiert wird, und
   - bei dem die Zuordnung der Prioritatsklasse unter Berücksichtigung der ermittelten Information erfolgt.

4. Verfahren nacn einem der Anspruche 1 bis 3,
   bei dem zwischen den Anordnungen, mit denen das Verfahren durchgeführt wird und die miteinander gekoppelt sind, eine Signalisierung bezuglich einer Kommunikationsverbindung, denen das Datenpaket zugeordnet wird, vor der Übertragung des Datenpakets erfolgt.

5. Verfahren nach einem der Ansprüche 1 bis 4,

   - bei dem mindestens jeder Prioritätsklasse mindestens ein Teil eines Pufferspeichers (PS) zugeordnet wird, und
   - bei dem das Datenpaket nur in dem Teil des Pufferspeichers (PS) gespeichert wird, der der Prioritätsklasse zugeordnet ist, die auch dem Datenpaket zugeordnet wurde.

6. Verfahren nach Anspruch 5,
   bei dem die Anzahl in dem Pufferspeicher (PS) und/oder die Anzahl mindestens in einem Teil des Pufferspeichers (PS) gespeicherten Datenpakten ermittelt wird, wobei der Teil des Pufferspeichers (PS) einer Prioritätsklasse zugeordnet ist und nur ein Datenpaket speichert, welches die entsprechende Prioritätsklasse aufweist, und mit der die in dem Pufferspeicher (PS) gespeicherten Datenpakete in einer vorgebbaren Reihenfolge ausgelesen werden und ubertragen werden.

7. Verfahren nach Anspruch 6,
   bei dem die Reihenfolge durch die Prioritätsklassen festgelegt ist in der Weise, daß die Datenpakete in der Reihenfolge nach fallender Priorität der Datenpakete ausgelesen werden und übertragen werden.

8. Verfahren nach einem der Ansprüche 1 bis 7,
   bei dem für den Fall, daß der Pufferspeicher (PS) oder mindestens ein Teil des Pufferspeichers (PS) mit gespeicherten und noch nicht wieder ausgelesenen Datenpakten voll beschrieben ist und ein weiteres zu ubertragendes Datenpaket in dem Pufferspeicher (PS) oder mindestens in dem Teil des Pufferspeichers (PS) gespeichert werden soll, eine künstliche Kollision erzeugt wird und dies der das Datenpaket (DP) sendenden Anordnung mitgeteilt wird.

9. Verfahren nach einem der Ansprüche 1 bis 8,
   bei dem nur in dem Fall eine künstliche Kollision erzeugt wird, wenn das Datenpaket (DP) eine Angabe enthält, daß für die das Datenpaket (DP) sendende Anordnung die Erzeugung einer künstlichen Kollision zulässig ist.

**10.** Verfahren nach einem der Ansprüche 1 bis 9,
bei dem für eine Kommunikationsverbindung, welche eine beliebige Anzahl zu übertragender Datenpakete aufweist, zu Beginn der Kommunikationsverbindung vorgebbare Betriebsmittel für die Kommunikationsverbindung reserviert wird.

**11.** Verfahren nach einem der Ansprüche 1 bis 10,

- bei dem von einer Anordnung in vorgebbaren Zeitabständen mindestens eine Zeitnachricht generiert wird und an mindestens einen Teil von mit der Anordnung gekoppelte weitere Anordnungen übertragen wird,
- bei dem die Zeitnachricht eine Synchronisierungsnachricht enthält, abhängig von der Zeitintervalle ermittelt werden, die zur Übertragung von Datenpaketen jeweils einer vorgebbaren Prioritätsklasse vorgesehen sind,
- bei dem die Zeitnachricht von mindestens dem Teil der weiteren Anordnungen empfangen wird,
- bei dem die empfangene Zeitnachricht ausgewertet wird, wobei die Synchronisierungszeit ermittelt wird, abhängig von der die Zeitintervalle ermittelt werden, die zur Übertragung von Datenpaketen jeweils einer vorgebbaren Prioritätsklasse vorgesehen sind.

**12.** Verfahren nach Anspruch 11,
bei dem das Datenpaket nur in dem Zeitintervall übertragen wird, das für die Prioritatsklasse vorgesehen ist, die dem Datenpaket zugeordnet wurde.

**13.** Anordnung zur Durchführung des Verfahrens nach einem der Ansprüche 1 bis 12,

- mit einer Datenpaket-Klassifizierungseinheit (DK), mit der einem zu übertragenden Datenpaket eine von mindestens zwei Prioritatsklassen zugeordnet wird,
- mit einer Prioritäts-Markierungseinheit (PM), mit der das Datenpaket entsprechend der Prioritätsklasse eindeutig gekennzeichnet wird,
- mit einem Pufferspeicher (PS), in dem mindestens das zu übertragende Datenpaket zwischengespeichert wird, und
- mit einer Betriebsmittel-Verwaltungseinheit (BMV), die derart eingerichtet ist, daß eine Zugangskontrolle für jedes Datenpaket unter Berücksichtigung der dem jeweiligen Datenpaket zugeordneten Prioritätsklasse durchgeführt wird, wobei das jeweilige Datenpaket gemäß einer vorgebbaren Reihenfolge, die durch ein vorgebbares Scheduling-Verfahren festgelegt wird, zuder zweiten Anordnung übertragen wird.

**14.** Anordnung nach Anspruch 13,

- mit einer Empfangereinheit (EM), mit der ein zu übertragendes Datenpaket in dem Ethernet-Vermittlungsgerät empfangen wird,
- mit einer Prioritäts-Analyseeinheit (PA), mit der eine dem Datenpaket zugeordnete Prioritatsklasse ermittelt wird.

**15.** Anordnung nach Anspruch 13 oder 14, bei der die Betriebsmittel-Verwaltungseinheit (BMV) derart ausgestaltet ist, daß mindestens eine der folgenden Funktionen gewährleistet ist:

- Verwaltung von Betriebsmitteln der Anordnung und/oder von Betriebsmitteln eines zur Ubertragung des Datenpakets verwendeten Datennetzes,

- eine Signalisierung zwischen der Anordnung und mindestens einer weiteren Anordnung, mit der die Anordnung gekoppelt ist, mit der Charakteristika einer Kommunikationsverbindung, der das Datenpaket zugeordnet wird, festgelegt werden.

**16.** Anordnung nach Anspruch 15,
bei dem die Betriebsmittel-Verwaltungseinheit (BMV) eine eigene Media Access Control-Adresse (MAC-Adresse) aufweist.

**17.** Anordnung nach einem der Ansprüche 13 bis 16,
bei dem mindestens ein Teil des Pufferspeichers (PS) einer Prioritatsklasse zugeordnet ist und nur ein Datenpaket speichert, welches die entsprechende Prioritätsklasse aufweist.

**18.** Anordnung nach einem der Anspruche 13 bis 17,
bei dem der Pufferspeicher (PS) und/oder mindestens ein Teil des Pufferspeichers (PS) als First-In-First-Out-Pufferspeicher (FIFO-Pufferspeicher) ausgestaltet ist.

**Claims**

**1.** Method for transmitting a data packet on the Ethernet from a first device to at least a second device,

- in which one of at least two priority classes is assigned to the data packet to be transferred (201),

- in which the data packet is uniquely identified according to the priority class (202), **characterized in that** access control is carried out for each data packet in accordance with the priority class assigned to the relevant data packet, where the relevant data packet is transferred to the second device in a predefinable sequence that is specified by a predefinable scheduling method.

**2.** Method according to Claim 1,
in which the data packet is received by the second device (204),

- in which the priority class assigned to the data packet is determined (205), and

- in which the data packet is forwarded in accordance with the priority class assigned to the data packet (206).

**3.** Method according to Claim 1 or 2,

- in which information contained in the data packet relating to the type of data packet and/or a communication link to which the data packet is assigned is analyzed, and
- in which the assignment of the priority class is made in accordance with the information thus determined.

**4.** Method according to one of the Claims 1 to 3,
in which between the devices with which the method is performed and which are coupled to one another, signaling takes place before transmission of the data packet with regard to a communication link to which the data packet is assigned.

**5.** Method according to one of the Claims 1 to 4,

- in which at least one part of a buffer store (PS) is assigned to at least each priority class, and
- in which the data packet is stored only in the part of the buffer store (PS) which is assigned to the priority class that has also been assigned to the data packet.

**6.** Method according to Claim 5,
in which the number of data packets stored in the buffer store (PS) and/or the number of data packets stored at least in one part of the buffer store (PS) is determined, where the part of the buffer store (PS) is assigned to a priority class and only a data packet that has the relevant priority class is stored, and with which the data packets stored in the buffer store (PS) are read out and transferred in a predefinable sequence.

**7.** Method according to Claim 6,
in which the sequence is defined by the priority classes in that the data packets are read out and transferred in descending order of the priority of the data packets.

**8.** Method according to one of the Claims 1 to 7,
in which in the event that the buffer store (PS) or at least a part of the buffer store (PS) is full of data packets that have been stored but not yet read out and a further data packet to be transmitted is to be stored in the buffer store (PS) or at least in that part of the buffer store (PS) an artificial collision is generated and this is notified to the device sending the data packet (DP).

**9.** Method according to one of the Claims 1 to 8,
in which an artificial collision is generated only if the data packet (DP) contains an indication that the generation of an artificial collision is permitted for the device sending the data packet (DP).

10. Method according to one of the Claims 1 to 9
in which predefinable resources are reserved at the start of a communication link for a communication link which has any number of data packets to be transmitted.

11. Method according to one of the Claims 1 to 10,

- in which at least one time message is generated by a device in predefinable intervals and is transferred to at least some further devices coupled to the device,
- in which the time message contains a synchronization message, depending on which time intervals are determined that are provided for transmitting data packets of a predefinable priority class,
- in which the time message is received by at least some of the further devices,
- in which the received time message is evaluated, whereby the synchronization time is determined, depending on which the time intervals are determined that are provided for transmitting data packets of a predefinable priority class.

12. Method according to Claim 11,
in which the data packet is transmitted only in the interval provided for the priority class that has been assigned to the data packet.

13. Device for performing the method according to one of the Claims 1 to 12

- with a data packet classification unit (DK) with which one of at least two priority classes is assigned to the data packet to be transmitted,
- with a priority marking unit (PM) with which the data packet is uniquely identified according to the priority class,
- with a buffer store (PS) in which at least the data packet to be transmitted is stored, and
- with a resource management unit (BMV) which is embodied so that access control is performed for each data packet in accordance with the priority class assigned to the data packet, where the relevant data packet is transferred according to a predefinable sequence that is determined by a predefinable scheduling method.

14. Device according to Claim 13,

- with a receiver unit (EM) with which a data packet to be transmitted is received in the Ethernet switching device,
- with a priority analysis unit (PA) with which a priority class assigned to the data packet is determined.

15. Device according to Claim 13 or 14,
in which the resource management unit (BMV) is embodied in such a way that at least one of the following functions is guaranteed:

- management of the resources of the device and/or of resources of a data network used for transmitting the data packet,
- signaling between the device and at least one further device with which the device is coupled, with which characteristics of a communication link to which the data packet is assigned are determined.

16. Device according to Claim 15,
in which the resource management unit (BMV) has its own media access control address (MAC address).

17. Device according to one of the Claims 13 to 16,
in which at least one part of the buffer store (PS) is assigned to a priority class and stores only data packets that have the relevant priority class.

18. Device according to one of the Claims 13 to 17,
in which the buffer store (PS) and/or at least one part of the buffer store (PS) is embodied as a first-in, first-out buffer store (FIFO buffer store).

**Revendications**

1. Procédé de transmission d'un paquet de données sur Ethernet entre un premier dispositif et au moins un deuxième dispositif, dans lequel

   - l'une d'au moins deux classes de priorité est affectée au paquet de données à transmettre (201) et
   - le paquet de données est marqué univoquement conformément à la classe de priorité (202),

   **caractérisé en ce qu'**est exécuté, pour chaque paquet de données, un contrôle d'accès compte tenu de la classe de priorité affectée au paquet de données respectif, le paquet de données respectif étant transmis au deuxième dispositif selon un ordre prédéterminable qui est établi par un procédé d'ordonnancement prédéterminable.

2. Procédé selon la revendication 1, dans lequel

   - le paquet de données est reçu par le deuxième dispositif (204),
   - la classe de priorité affectée au paquet de données est déterminée (205) et
   - le paquet de données continue d'être transmis compte tenu de la classe de priorité affectée au paquet de données (206).

3. Procédé selon la revendication 1 ou 2, dans lequel

   - une information contenue dans le paquet de données concernant la nature du paquet de données et/ou une liaison de communication à laquelle est affecté le paquet de données est analysée et
   - l'affectation de la classe de priorité se fait compte tenu de l'information déterminée.

4. Procédé selon l'une des revendications 1 à 3, dans lequel se fait, avant la transmission du paquet de données, entre les dispositifs avec lesquels est exécuté le procédé et lesquels sont couplés entre eux, une signalisation concernant une liaison de communication à laquelle est affecté le paquet de données.

5. Procédé selon l'une des revendications 1 à 4, dans lequel

   - au moins une partie d'une mémoire tampon (PS) est affectée à au moins chaque classe de priorité et
   - le paquet de données n'est enregistré que dans la partie de la mémoire tampon (PS) qui est affectée à la classe de priorité qui a également été affectée au paquet de données.

6. Procédé selon la revendication 5, dans lequel est déterminé le nombre de paquets de données enregistré dans la mémoire tampon (PS) et/ou le nombre de paquets de données enregistrés dans au moins une partie de la mémoire tampon (PS), la partie de la mémoire tampon (PS) étant affectée à une classe de priorité et enregistrant seulement un paquet de données qui présente la classe de priorité correspondante et avec lequel les paquets de données enregistrés dans la mémoire tampon (PS) sont extraits et transmis dans un ordre prédéterminable.

7. Procédé selon la revendication 6, dans lequel l'ordre est établi par les classes de priorité de manière telle que les paquets de données sont extraits et transmis par ordre de priorité décroissante des paquets de données.

8. Procédé selon l'une des revendications 1 à 7, dans lequel est produite une collision artificielle dans le cas où la mémoire tampon (PS) ou au moins une partie de la mémoire tampon (PS) est pleine de paquets de données enregistrés et non encore réextraits et où il s'agit d'enregistrer dans la mémoire tampon (PS) ou au moins dans une partie de la mémoire tampon (PS) un autre paquet de données à transmettre, et il en est fait communication au dispositif qui émet le paquet de données (DP).

9. Procédé selon l'une des revendications 1 à 8, dans lequel une collision artificielle n'est produite que dans le cas où le paquet de données (DP) contient une indication renseignant que la production d'une collision artificielle est autorisée pour le dispositif qui émet le paquet de données (DP).

10. Procédé selon l'une des revendications 1 à 9, dans lequel sont réservées, pour une liaison de communication comportant un nombre quelconque de paquets de données à transmettre, des ressources prédéterminables pour la liaison de communication au début de la liaison de communication.

**11.** Procédé selon l'une des revendications 1 à 10, dans lequel

- au moins un message temporel est généré à intervalles de temps prédéterminables par un dispositif et est transmis à au moins une partie de dispositifs supplémentaires couplés au dispositif,
- le message temporel contient un message de synchronisation en dépendance duquel il est procédé à la détermination d'intervalles de temps qui sont prévus pour la transmission de paquets de données respectivement d'une classe de priorité prédéterminable,
- le message temporel est reçu par au moins la partie des dispositifs supplémentaires,
- le message temporel reçu est évalué, le temps de synchronisation étant déterminé, en dépendance duquel il est procédé à la détermination des intervalles de temps qui sont prévus pour la transmission de paquets de données respectivement d'une classe de priorité prédéterminable.

**12.** Procédé selon la revendication 11, dans lequel le paquet de données n'est transmis que dans l'intervalle de temps qui est prévu pour la classe de priorité qui a été affectée au paquet de données.

**13.** Dispositif pour l'exécution du procédé selon l'une des revendications 1 à 12, comprenant

- une unité de classification de paquets de données (DK) permettant d'affecter l'une d'au moins deux classes de priorité à un paquet de données à transmettre,
- une unité de marquage de priorité (PM) permettant de marquer univoquement le paquet de données conformément à la classe de priorité,
- une mémoire tampon (PS) dans laquelle au moins le paquet de données à transmettre est enregistré temporairement et
- une unité de gestion des ressources (BMV) qui est conçue de manière telle qu'un contrôle d'accès est exécuté pour chaque paquet de données compte tenu de la classe de priorité affectée au paquet de données respectif, le paquet de données respectif étant transmis au deuxième dispositif selon un ordre prédéterminable qui est établi par un procédé d'ordonnancement prédéterminable.

**14.** Dispositif selon la revendication 13, comprenant

- une unité réceptrice (EM) servant à recevoir, dans l'appareil de commutation Ethernet, un paquet de données à transmettre et
- une unité d'analyse de priorité (PA) permettant de déterminer une classe de priorité affectée au paquet de données.

**15.** Dispositif selon la revendication 13 ou 14, dans lequel l'unité de gestion des ressources (BMV) est configurée de manière telle qu'au moins l'une des fonctions suivantes est assurée:

- gestion de ressources du dispositif et/ou de ressources d'un réseau de données utilisé pour la transmission du paquet de données,
- une signalisation entre le dispositif et au moins un dispositif supplémentaire auquel est couplé le dispositif permettant d'établir des caractéristiques d'une liaison de communication à laquelle est affecté le paquet de données.

**16.** Dispositif selon la revendication 15, dans lequel l'unité de gestion des ressources (BMV) comporte une propre adresse «Média Access Control» (adresse MAC).

**17.** Dispositif selon l'une des revendications 13 à 14, dans lequel au moins une partie de la mémoire tampon (PS) est affectée à une classe de priorité et enregistre seulement un paquet de données qui présente la classe de priorité correspondante.

**18.** Dispositif selon l'une des revendications 13 à 17, dans lequel la mémoire tampon (PS) et/ou au moins une partie de la mémoire tampon (PS) est configurée comme une mémoire tampon «First In First Out» (mémoire tampon FIFO).

## FIG 1

## FIG 2

| |
|---|
| Zuordnung einer Prioritätsklasse zu Datenpaket ─201 |

↓

| |
|---|
| Kennzeichnung des Datenpakets ─202 |

↓

| |
|---|
| Übertragung des Datenpakets von erster Anordnung zu zweiter Anordnung ─203 |

↓

| |
|---|
| Empfang des Datenpakets in zweiter Anordnung ─204 |

↓

| |
|---|
| Ermittlung der Prioritätsklasse für das Datenpaket ─205 |

↓

| |
|---|
| Übertragen des Datenpakets ─206 |

FIG 3A
| DA | SA | Type | Info | FCS | — DP

FIG 3B
| DA | SA | PM | FID | Info | FCS | — DP

FIG 3C
| DA | SA | Len | DSAP | SSAP | Contr. | Info | FCS | — DP

FIG 3D
| DA | SA | Len | PM | PM | Contr. | FID | Info | FCS | — DP

FIG 3E
| DA | SA | Len | OA | OA | 03 | 000 | Type | Info | FCS | — DP

FIG 3F
| DA | SA | Len | OA | OA | 03 | 000 | PM | FID | Info | FCS | — DP

FIG 4

EP 0 885 506 B1

**FIG 5A**
| DA | SA | Type | Info |
|----|----|------|------|

~DP

**FIG 5B**
| DA | SA | BPStat | FID | Info |
|----|----|--------|-----|------|

~DP

**FIG 5C**
| DA | SA | Len | DSAP | SSAP | Contr. | Info |
|----|----|-----|------|------|--------|------|

~DP

**FIG 5D**
| DA | SA | BPStat DSAP | BPStat SSAP | PM | Contr. | FID | Info |
|----|----|-------------|-------------|----|--------|-----|------|

~DP

**FIG 5E**
| DA | SA | Len | OA | OA | 03 | 000 | Type | Info |
|----|----|-----|----|----|----|-----|------|------|

~DP

**FIG 5F**
| DA | SA | Len | OA | OA | 03 | 000 | BPStat | FID | Info |
|----|----|-----|----|----|----|-----|--------|-----|------|

~DP

# FIG 6

A1            A2            A3

Connect Request

(DA.SA.FID.Type.TSpec.RSpec)

Connect Request

(DA.SA.FID.Type.TSpec.RSpec)

Connect Reply

(DA.SA.FID.Reason.Result(Success)

Connect Reply

(DA.SA.FID.Reason.Result(Success)

DP

DP

Disconnect Request(DA.SA.FID)

Disconnect Request(DA.SA.FID)

# FIG 7

ZS1      ZS2

$t_0$   $S_1$   $t_0 + S_L$   $S_2$   $t_0 + S_F$